# EUROPÄISCHE PATENTSCHRIFT

(11) **EP 4 519 137 B1**
(45) Veröffentlichungstag und Bekanntmachung des Hinweises auf die Patenterteilung: **14.01.2026**
(21) Anmeldenummer: 23720622.2
(22) Anmeldetag: 21.04.2023
(51) Int. Cl.: B60W 30/18, B60W 50/14, B60W 10/04, B60W 10/184, B60W 10/20, B62D 15/02, B60W 30/10, B60W 50/00

(54) **VERFAHREN ZUM MANÖVRIEREN EINES FAHRZEUGS AUF EINER MEHRSPURIGEN STRASSE MIT BESTIMMUNG EINES ANFANGSPUNKTS EINES VERZÖGERUNGSSTREIFENS SOWIE FAHRERASSISTENZSYSTEM**
METHOD FOR MANOEUVRING A VEHICLE ON A MULTI-LANE ROAD WITH DETERMINATION OF A STARTING POINT OF A DECELERATION LANE, AND DRIVER ASSISTANCE SYSTEM
PROCÉDÉ PERMETTANT DE MANOEUVRER UN VÉHICULE SUR UNE ROUTE À VOIES MULTIPLES, À DÉSIGNATION D'UN POINT DE DÉPART D'UNE BANDE DE DÉCÉLÉRATION ET SYSTÈME D'AIDE À LA CONDUITE

(30) Priorität: 05.05.2022 DE 102022111125
(43) Veröffentlichungstag der Anmeldung: 12.03.2025
(73) Patentinhaber: Bayerische Motoren Werke Aktiengesellschaft, 80809 München (DE)
(72) Erfinder: SCHULZ, Julius, 81547 München (DE); JANSEN, Axel, 85716 Unterschleißheim (DE); NIERMANN, Stephan, 85241 Hebertshausen (DE)
(86) Internationale Anmeldenummer: PCT/EP2023/060425
(87) Internationale Veröffentlichungsnummer: WO 2023/213566

(56) Entgegenhaltungen:
- DE-A1- 102015 209 671
- DE-A1- 102016 216 134
- DE-A1- 102016 216 135
- DE-A1- 102020 117 158
- DE-A1- 102021 003 682

## Beschreibung

Die vorliegende Erfindung betrifft ein Verfahren zum Manövrieren eines Fahrzeugs auf einer mehrspurigen Straße. Darüber hinaus betrifft die vorliegende Erfindung ein Fahrerassistenzsystem für ein Fahrzeug.

Aus dem Stand der Technik sind Fahrerassistenzsysteme zum Durchführen von zumindest teilautomatisierten Spurwechselmanövern bzw. so genannte Spurwechselassistenzsysteme bekannt. Bei diesen Fahrerassistenzsystemen mit automatisierter bzw. automatischer Spurwechselfunktion zeigt der Nutzer bzw. Fahrer typischerweise durch eine bestimmte Bedienhandlung einen gewünschten Spurwechsel an. Wenn eine solche Bedienhandlung erkannt wird, wird mittels des Fahrerassistenzsystems das Fahrzeug entlang einer geplanten Trajektorie auf den benachbarten Fahrstreifen bzw. die Zielspur mit automatisierter Querführung und im Allgemeinen auch mit automatisierter Längsführung manövriert. Bei derartigen Fahrerassistenzsystemen bzw. Spurwechselassistenzsystemen wird üblicherweise der fahrerseitige Spurwechselwunsch durch das Betätigen eines entsprechenden Bedienelements, beispielsweise eines Blinkerhebels, zum Aktivieren von außerhalb des Fahrzeugs sichtbaren Fahrtrichtungsanzeigern signalisiert.

Bekannte Fahrerassistenzsysteme bzw. Spurwechselassistenzsysteme überwachen im Allgemeinen vor dem Spurwechselmanöver mittels einer geeigneten Umfeldsensorik das Umfeld des Fahrzeugs. Auf die Bedienhandlung des Nutzers hin kann der Fahrstreifen gewechselt werden, falls auf dem benachbarten Fahrstreifen eine freie Lücke für das eigene Fahrzeug erkannt wurde.

Darüber hinaus sind aus dem Stand der Technik Fahrerassistenzsysteme bekannt, welche den Nutzer des Fahrzeugs auf einer mehrspurigen Straße bei einem Erreichen einer Ausfahrt oder einer Abzweigung unterstützen. Dabei kann das Fahrerassistenzsystem beispielsweise infolge einer Eingabe von einem Navigationsziel alle nötigen Spurwechsel bis zum Erreichen einer Ausfahrt vorbereiten. Hierzu kann das Fahrerassistenzsystem zunächst eine freie Lücke für das Fahrzeug auf dem benachbarten Fahrstreifen erkennen, und anschließend die Geschwindigkeit des Fahrzeugs für das nachfolgende Spurwechselmanöver in die erkannte Lücke anpassen. Das Spurwechselmanöver selbst kann mittels eines Spurwechselassistenzsystems durchgeführt werden, wobei das Spurwechselassistenzsystem automatisch oder nach einer Bedieneingabe durch den Nutzer ausgelöst wird.

Um die jeweiligen Spurwechselmanöver vorbereiten zu können, ist es erforderlich, den Abstand zwischen dem Fahrzeug und der Ausfahrt zu kennen. Gemäß dem Stand der Technik wird dieser Abstand anhand von digitalen Kartendaten und/oder Sensordaten eines Umfeldsensors, insbesondere einer Kamera, bestimmt. Ferner ist insbesondere wünschenswert, dass ein Anfangspunkt des Verzögerungsstreifens, der zu der Ausfahrt führt, erkannt wird. Somit können die Spurwechselmanöver derart geplant werden, dass dem Nutzer das Spurwechselmanöver auf dem Verzögerungsstreifen möglichst frühzeitig angeboten werden kann. Aktuell wird dieser Anfangspunkt des Verzögerungsstreifens mittels der Kamera und/oder anhand von digitalen Kartendaten erkannt. Hierbei besteht die Problematik, dass die Kamera den Anfangspunkt aufgrund beschränkter Reichweite erst sehr spät erfassen kann. Zudem können die digitalen Kartendaten oftmals ungenau sein. Daher kann die Funktion vor allem dann, wenn noch eine Information an den Nutzer herausgegeben werden soll, den genauen Punkt für den Spurwechsel nicht bestimmen.

Die DE 10 2016 216 134 A1 beschreibt ein Fahrerassistenzsystem zur zumindest automatisierten Querführung eines Kraftfahrzeugs. Wenn festgestellt wurde, dass ein Spurwechsel erforderlich ist, wird der Fahrer über den erforderlichen Spurwechsel mit dem Ziel informiert, dass dieser den erforderlichen Spurwechsel einleitet. Hierzu wird die Querführung seitens des Fahrerassistenzsystems derart angepasst, dass die Querposition des Fahrzeugs in Bezug auf die aktuelle Fahrspur in Richtung derjenigen Seite der beiden Seiten der aktuellen Fahrspur verschoben wird, über die der erforderliche Spurwechsel zu erfolgen hat.

Die DE 10 2016 216 135 A1 offenbart ein Fahrerassistenzsystem, welches prüft, ob eine fahrerseitige Auslöse-Bedienhandlung zum Auslösen von erforderlichen mehrfachen Spurwechseln vorliegt. Falls festgestellt wird, dass die Auslöse-Bedienhandlung vorliegt, werden die erforderlichen mehreren Spurwechsel ausgehend von der aktuellen Fahrspur auf eine Zielfahrspur mit zumindest automatisierter Querführung automatisiert seitens des Spurwechselassistenzsystems durchgeführt.

Ferner beschreibt die DE 10 2020 117 158 A1 ein Fahrassistenzsystem, welches eingerichtet ist, eine detektierte Spurmarkierungsaufspaltung und/oder -änderung bei einer Spurwechselfunktion zu berücksichtigen.

Zudem zeigt die DE 10 2015 209 671 A1 ein Fahrerassistenzsystem für ein Fahrzeug. Hierbei besteht die Möglichkeit der Beeinflussung der Längsdynamik des Fahrzeugs und/oder der Aktivierung einer vom Fahrer wahrnehmbaren Warnvorrichtung, bei der Erkennung eines vom Fahrzeug zu passierenden Bahnübergangs.

Außerdem offenbart die DE 10 2021 003 682 A1 ein Verfahren zum Betrieb eines Assistenzsystems eines Fahrzeugs, bei welchem eine Fahrgeschwindigkeit des Fahrzeugs geregelt wird, wobei die Fahrgeschwindigkeit begrenzt wird, wenn das Fahrzeug bei einer Autobahnfahrt einer die Autobahn verlassenden Fahrtroute folgt.

Es ist Aufgabe der vorliegenden Erfindung, eine Lösung aufzuzeigen, wie ein Verfahren der eingangs genannten Art hinsichtlich der Vorbereitung der Spurwechselmanöver verbessert werden kann.

Diese Aufgabe wird erfindungsgemäß durch ein Verfahren sowie durch ein Fahrerassistenzsystem mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Manövrieren eines Fahrzeugs auf einer mehrspurigen Straße. Das Verfahren umfasst das Empfangen eines Navigationsbefehls zum Durchführen eines Spurwechselmanövers von einem zweiten Fahrstreifen der Straße über einen ersten Fahrstreifen der Straße auf einen Verzögerungsstreifen der Straße. Des Weiteren umfasst das Verfahren das Bestimmen eines Abstands zwischen dem Fahrzeug und einem Anfangspunkt des Verzögerungsstreifens, wobei der Abstand anhand von Sensordaten eines Umfeldsensors und/oder anhand von digitalen Kartendaten bestimmt wird. Ferner umfasst das Verfahren das Vorbereiten des Spurwechselmanövers von dem zweiten Fahrstreifen auf den ersten Fahrstreifen in Abhängigkeit von dem Abstand. Darüber hinaus umfasst das Verfahren das Erfassen eines Verkehrszeichens, welches eine Entfernung zu einer Ausfahrt der Straße angibt und das Bestimmen einer durch das Verkehrszeichen angegebenen Entfernungsinformation. Außerdem umfasst das Verfahren das Bestimmen des Abstands zwischen dem Fahrzeug und dem Anfangspunkt des Verzögerungsstreifens zusätzlich in Abhängigkeit von der Entfernungsinformation.

Mit Hilfe des Verfahrens soll der Nutzer bzw. Fahrer des Fahrzeugs beim Manövrieren des Fahrzeugs auf einer mehrspurigen Straße unterstützt werden. Bei der mehrspurigen Straße kann es sich grundsätzlich um eine Fernstraße, eine Bundesstraße, eine Schnellstraße, eine autobahnähnliche Straße oder dergleichen handeln. Bevorzugt handelt es sich bei der mehrspurigen Straße um eine Autobahn. Die Straße kann beispielsweise zwei Richtungsfahrbahnen mit jeweils zumindest zwei Fahrstreifen, welche vorliegend als erster Fahrstreifen und zweiter Fahrstreifen bezeichnet werden, aufweisen. Auf diesen Fahrstreifen können sich sowohl das eigene Fahrzeug als auch weitere Verkehrsteilnehmer in eine vorgegebene Fahrtrichtung bewegen. Die Straße kann auch weitere Fahrstreifen aufweisen. Dabei kann der erste Fahrstreifen an eine Ausfahrt bzw. den Verzögerungsstreifen, welcher zu der Ausfahrt führt, angrenzen. Der erste Fahrstreifen kann dann beispielsweise die rechte Spur einer Autobahn sein.

Mittels des Fahrerassistenzsystems des Fahrzeugs kann der Navigationsbefehl empfangen werden, welcher beschreibt, dass das Fahrzeug ausgehend von dem zweiten Fahrstreifen über den ersten Fahrstreifen auf den Verzögerungsstreifen der Straße und von dort auf die Ausfahrt der Straße manövriert werden soll. Mit anderen Worten soll zunächst ein Spurwechsel von dem zweiten Fahrstreifen auf den ersten Fahrstreifen durchgeführt werden, anschließend soll ein Spurwechsel von dem ersten Fahrstreifen auf den Verzögerungsstreifen durchgeführt werden und schließlich soll das Fahrzeug die Straße über die Ausfahrt verlassen. Ferner kann das Fahrzeug von der Straße über die Ausfahrt auf eine andere Straße wechseln. Dies kann beispielsweise bei einem Autobahnkreuz oder dergleichen der Fall sein. Grundsätzlich kann der Navigationsbefehl durch die Routenführung bzw. ein Navigationssystem des Fahrzeugs vorgegeben werden. Alternativ oder zusätzlich kann der Navigationsbefehl durch eine entsprechende Bedieneingabe von dem Nutzer begründet sein.

Des Weiteren kann mittels des Fahrerassistenzsystems der Spurwechsel bzw. das Spurwechselmanöver von dem zweiten Fahrstreifen auf den ersten Fahrstreifen sowie von dem ersten Fahrstreifen auf den Verzögerungsstreifen vorbereitet werden. Hierzu kann zunächst mit entsprechenden Umfeldsensoren des Fahrerassistenzsystems bzw. des Fahrzeugs nach freien Lücken für das Fahrzeug auf dem ersten Fahrstreifen gesucht werden. Somit können freie Lücken zwischen den weiteren Verkehrsteilnehmern auf dem ersten Fahrstreifen gefunden werden, welche für das nachfolgende Spurwechselmanöver geeignet sind. Dabei kann das Spurwechselmanöver von dem zweiten auf den ersten Fahrstreifen derart geplant werden, dass das Fahrzeug im Anschluss rechtzeitig auf den Verzögerungsstreifen wechseln kann.

Wenn beispielsweise eine freie Lücke gefunden wurde, kann ein entsprechender Hinweis an den Nutzer zum Betätigen eines Bedienelements bzw. des Blinkerhebels ausgegeben werden. Infolge der Betätigung des Bedienelements kann dann das Spurwechselmanöver von dem zweiten Fahrstreifen auf den ersten Fahrstreifen ausgelöst werden bzw. initiiert werden. Gleiches gilt für das Spurwechselmanöver von dem ersten Fahrstreifen auf den Verzögerungsstreifen. Die jeweiligen Spurwechselmanöver können mittels des Fahrerassistenzsystems bzw. eines Spurwechselassistenzsystems automatisch bzw. automatisiert durchgeführt werden.

Um die jeweiligen Spurwechselmanöver entsprechend vorbereiten zu können, kann die aktuelle Geschwindigkeit des Fahrzeugs berücksichtigt werden. Zudem kann die Verkehrsdichte bzw. die Anzahl der weiteren Verkehrsteilnehmer auf dem ersten Fahrstreifen und/oder dem zweiten Fahrstreifen berücksichtigt werden. Des Weiteren ist vorgesehen, dass die Spurwechselmanöver in Abhängigkeit von dem Abstand des Fahrzeugs zu dem Anfangspunkt des Verzögerungsstreifens vorbereitet werden bzw. bestimmt werden. Hierbei ist es insbesondere wünschenswert, dass dem Fahrer der Hinweis zum Betätigen des Bedienelements von dem ersten Fahrstreifen auf den Verzögerungsstreifen ausgegeben wird, bevor oder sobald das Fahrzeug den Anfangspunkt des Verzögerungsstreifens erreicht hat.

Der Anfangspunkt des Verzögerungsstreifens beschreibt dabei in Fahrtrichtung des Fahrzeugs betrachtet den Punkt des Verzögerungsstreifens, ab dem der Verzögerungsstreifen beginnt. Der Verzögerungsstreifen kann auch als Ausfädelstreifen bezeichnet werden. Der Verzögerungsstreifen kann sich im Rechtsverkehr rechts neben dem ersten Fahrstreifen bzw. der rechten Spur befinden, und zwar in dem Bereich, in dem sich ansonsten der Standstreifen befindet. Am Anfangspunkt des Verzögerungsstreifens ändert die durchgezogene Linie, die ansonsten den Standstreifen von dem ersten Fahrstreifen abtrennt, den Verlauf. Im Bereich des Verzögerungsstreifens befindet sich zwischen dem ersten Fahrstreifen und dem Verzögerungsstreifen eine gestrichelte Linie.

Dabei wird der Anfangspunkt des Verzögerungsstreifens anhand von digitalen Kartendaten und/oder mittels eines satellitengestützten Positionsbestimmungssystems bestimmt. Somit kann die aktuelle Position des Fahrzeugs bezogen auf die digitale Karte und somit relativ zu dem Anfangspunkt des Verzögerungsstreifens bestimmt werden. Alternativ oder zusätzlich kann der Anfangspunkt des Verzögerungsstreifens anhand der Sensordaten des Umfeldsensors, insbesondere einer Kamera, bestimmt werden.

Gemäß der vorliegenden Erfindung ist nun vorgesehen, dass zudem zumindest ein Verkehrszeichen erfasst wird, welches die Entfernung zu der Ausfahrt beschreibt. Es kann auch vorgesehen sein, dass mehrere Verkehrszeichen erfasst werden, welche die Entfernung zu der Ausfahrt beschreiben. Bei dem Verkehrszeichen kann es sich insbesondere um Entfernungsbaken handeln. Das Verkehrszeichen kann auch einer Schilderbrücke oder einem Verkehrsleitsystem zugeordnet sein.

Diese Verkehrszeichen bzw. Entfernungsbaken können beispielsweise auf Grundlage der Sensordaten des Umfeldsensors bzw. der Bilddaten der Kamera erfasst werden. Zudem kann auf Grundlage des erfassten Verkehrszeichens eine Entfernungsinformation bestimmt werden, welche den Abstand zwischen dem Verkehrszeichen und der Ausfahrt bzw. einem definierten Bezugspunkt der Ausfahrt bzw. des Verzögerungsstreifens beschreibt. Diese Entfernungsinformation wird nun erfindungsgemäß dazu berücksichtigt, den Abstand zwischen dem Fahrzeug und dem Anfangspunkt des Verzögerungsstreifens zu bestimmen. Somit kann einerseits der Nachteil ausgeglichen werden, dass die digitalen Kartendaten eine gewisse Ungenauigkeit aufweisen können. Zudem kann dem Aspekt abgeholfen werden, dass der Anfangspunkt des Verzögerungsstreifens mittels der Kamera erst erfasst werden kann, wenn sich dieser in dem Erfassungsbereich der Kamera befindet. Insgesamt kann somit die Entfernung des Fahrzeugs zu dem Anfangspunkt des Verzögerungsstreifens präziser ermittelt werden und damit die jeweiligen Spurwechselmanöver besser geplant werden.

Bevorzugt wird eine Länge des Verzögerungsstreifens anhand der digitalen Kartendaten und/oder auf Grundlage einer vorbestimmten Länge bestimmt. Des Weiteren wird der Abstand zwischen dem Fahrzeug und dem Anfangspunkt bevorzugt in Abhängigkeit von der Länge des Verzögerungsstreifens bestimmt. Das Verkehrszeichen bzw. die erfassten Entfernungsbaken können den Abstand zu der Ausfahrt bzw. einem definierten Bezugspunkt der Ausfahrt beschreiben. Um die Lage des Anfangspunkts des Verzögerungsstreifens bestimmen zu können, kann die Länge des Verzögerungsstreifens ermittelt oder geschätzt werden. Dabei kann die Länge des Verzögerungsstreifens auf Grundlage der digitalen Kartendaten ermittelt werden. Alternativ oder zusätzlich kann es vorgesehen sein, dass die Länge des Verzögerungsstreifens auf Grundlage von einem vorbestimmten Längenwert bzw. einer pauschalen Annahme ermittelt wird. Die vorbestimmte Länge kann in Abhängigkeit von der Region, dem Straßentyp oder dergleichen ermittelt werden. Somit kann der Abstand zwischen dem Fahrzeug und dem Anfangspunkt des Verzögerungsstreifens präzise ermittelt werden.

Weiterhin ist vorteilhaft, wenn die Sensordaten des Umfeldsensors, die digitalen Kartendaten und/oder die Entfernungsinformation für die Bestimmung des Abstands zwischen dem Fahrzeug und dem Anfangspunkt des Verzögerungsstreifens gewichtet werden. Diese Daten können jeweils auf Grundlage der aktuellen Genauigkeit und/oder Verfügbarkeit gewichtet werden. Beispielsweise kann die Gewichtung der digitalen Kartendaten auf Grundlage der Genauigkeit bzw. Auflösung der digitalen Karte ermittelt werden. Ferner kann die Gewichtung der digitalen Kartendaten auf Grundlage der Genauigkeit des satellitengestützten Positionsbestimmungssystems bestimmt werden. Die Gewichtung der Sensordaten kann in Abhängigkeit von dem Typ des Umfeldsensors bzw. der Kamera bestimmt werden. Zusätzlich kann die Gewichtung der Sensordaten auf Grundlage der Sichtverhältnisse, der Verkehrsdichte oder dergleichen gewichtet werden. Die Entfernungsdaten können beispielsweise auf Grundlage der aktuellen Region gewichtet werden. Die jeweiligen Daten können umso höher gewichtet werden, je höher deren Genauigkeit für die Bestimmung des Abstands zwischen dem Fahrzeug und dem Anfangspunkt des Verzögerungsstreifens ist.

Weiterhin ist vorteilhaft, wenn zum Vorbereiten des Spurwechselmanövers ein Hinweis an den Nutzer des Fahrzeugs ausgegeben wird, wobei der Hinweis ausgegeben wird, bevor der Anfangspunkt des Verzögerungsstreifens anhand der Sensordaten des Umfeldsensors erkannt wird. wie zuvor erläutert kann es sich bei dem Umfeldsensor bevorzugt um eine Kamera handeln. Wie zuvor erläutert, kann ein entsprechender Hinweis an den Nutzer ausgegeben werden, dass das Spurwechselmanöver durchgeführt werden kann. Dabei wird der Hinweis für den Spurwechsel von dem ersten Fahrstreifen auf den Verzögerungsstreifen ausgegeben, bevor der Anfangspunkt des Verzögerungsstreifens mittels der Kamera erfasst werden kann. Somit bleibt dem Nutzer ausreichend Zeit, den Spurwechsel auszulösen und somit rechtzeitig auf den Verzögerungsstreifen zu wechseln.

Gemäß einer weiteren Ausführungsform wird das Spurwechselmanöver von dem ersten Fahrstreifen auf den Verzögerungsstreifen erlaubt, nachdem der Anfangspunkt des Verzögerungsstreifens anhand der Sensordaten des Umfeldsensors erkannt wird. Mit anderen Worten kann das Spurwechselmanöver bzw. die Aktivierung des Spurwechselassistenten zurückgehalten werden, bis der Anfangspunkt des Verzögerungsstreifens tatsächlich mittels der Kamera erfasst werden kann. Somit kann verhindert werden, dass das Spurwechselmanöver frühzeitig durchgeführt wird und damit die durchgezogene Linie, die den ersten Fahrstreifen von einem Standstreifen trennt, überfahren wird.

Wenn das Spurwechselmanöver von dem ersten Fahrstreifen auf den Verzögerungsstreifen mittels des Fahrerassistenzsystems bzw. des Spurwechselassistenzsystems automatisch bzw. automatisiert durchgeführt wird kann eine rechte Fahrbahnmarkierung stärker gewichtet werden. Beispielsweise können die rechte und die linke Fahrbahnmarkierung, welche den ersten Fahrstreifen begrenzen anhand der Sensordaten des Umfeldsensors bzw. der Kamera fortlaufend erfasst werden und/oder der Verlauf dieser Fahrbahnmarkierungen kann abgeschätzt werden. Sobald der Anfangspunkt des Verzögerungsstreifens erkannt wird, kann der rechte Fahrstreifen für das Spurwechselmanöver bzw. bei der lateralen Regelung beispielsweise höher gewichtet werden als der linke Fahrstreifen. Damit kann dieser Fahrbahnmarkierung bei der lateralen Regelung bzw. dem Spurwechselmanöver auf den Verzögerungsstreifen bis zur Ausfahrt gefolgt werden. Dies kann insbesondere erfolgen, bevor der Verzögerungsstreifen als zusätzlicher Fahrstreifen erkannt wird. Somit können Fehler der lateralen Regelung, die sich an den Fahrbahnmarkierungen orientiert, verhindert werden.

Es kann zudem vorgesehen sein, dass eine Kategorie des Bereichs der Fahrbahn rechts neben dem ersten Fahrstreifen von "nicht befahrbar" auf "befahrbar" geändert wird, sobald der Anfangspunkt des Verzögerungsstreifens erkannt wird. Auf diese Weise kann erreicht werden, dass das Spurwechselmanöver von dem ersten Fahrstreifen auf den Verzögerungsstreifen nicht aufgrund der Annahme der falschen Kategorie und/oder einer verspäteten Änderung der Kategorie verzögert wird. Ein Spurwechselmanöver über eine durchgezogene Linie wird dennoch bevorzugt verhindert.

Gemäß einer weiteren Ausführungsform wird eine Längsgeschwindigkeit des Fahrzeugs zum Vorbereiten des Spurwechselmanövers angepasst. Es kann also vorgesehen sein, dass mittels des Fahrerassistenzsystems eine Geschwindigkeit bzw. Längsgeschwindigkeit des Fahrzeugs zur Vorbereitung der jeweiligen Spurwechselmanöver angepasst wird. Insbesondere kann die Geschwindigkeit des eigenen Fahrzeugs verringert werden bzw. an eine Geschwindigkeit der weiteren Verkehrsteilnehmer auf den ersten Fahrstreifen angepasst werden. Beispielsweise kann die Geschwindigkeit des Fahrzeugs derart angepasst werden, dass eine Lücke in der Zielspur verfolgt wird.

Ein erfindungsgemäßes Fahrerassistenzsystem für ein Fahrzeug ist zum Durchführen eines erfindungsgemäßen Verfahrens und der vorteilhaften Ausgestaltungen davon eingerichtet.

Das Fahrerassistenzsystem kann insbesondere eine Recheneinrichtung aufweisen, welche durch zumindest ein elektronisches Steuergerät gebildet sein kann. Grundsätzlich kann die Recheneinrichtung zumindest einen Prozessor und/oder einen Speicher aufweisen.

Das Fahrerassistenzsystem kann dazu eingerichtet sein, einen Navigationsbefehl zum Durchführen des Spurwechselmanövers von einem zweiten Fahrstreifen der Straße über einen ersten Fahrstreifen der Straße auf einen Verzögerungsstreifen der Straße zu empfangen. Zudem kann das Fahrerassistenzsystem dazu eingerichtet sein, einen Abstand zwischen dem Fahrzeug und einem Anfangspunkt des Verzögerungsstreifens anhand von Sensordaten eines Umfeldsensors und/oder anhand von digitalen Kartendaten zu bestimmen. Dabei kann der Umfeldsensor insbesondere als Kamera ausgebildet sein. Als Sensordaten des Umfeldsensors können insbesondere Bilddaten empfangen werden. Zudem kann das Fahrerassistenzsystem einen Empfänger für ein satellitengestütztes Positionsbestimmungssystem aufweisen. Des Weiteren kann das Fahrerassistenzsystem dazu eingerichtet sein, das Spurwechselmanöver von dem zweiten Fahrstreifen auf den ersten Fahrstreifen in Abhängigkeit von dem Abstand vorzubereiten. Hierzu kann das Fahrerassistenzsystem gegebenenfalls in die Längsführung des Fahrzeugs eingreifen. Zudem kann das Fahrerassistenzsystem dazu eingerichtet sein, ein Verkehrszeichen, welches eine Entfernung zu einer Ausfahrt der Straße angibt, zu erfassen und eine durch das Verkehrszeichen angegebene Entfernungsinformation zu bestimmen. Zudem kann das Fahrerassistenzsystem dazu eingerichtet sein, den Abstand zwischen dem Fahrzeug und dem Anfangspunkt des Verzögerungsstreifens zusätzlich in Abhängigkeit von der Entfernungsinformation zu bestimmen.

Die mit Bezug auf das erfindungsgemäße Verfahren vorgestellten bevorzugten Ausführungsformen und deren Vorteile gelten entsprechend für das erfindungsgemäße Fahrerassistenzsystem.

Weitere Merkmale der Erfindung ergeben sich aus den Ansprüchen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Fahrerassistenzsystem zum Unterstützen eines Nutzers beim Manövrieren des Fahrzeugs auf einer mehrspurigen Straße aufweist; und
- Fig. 2: das Fahrzeug gemäß Fig. 1, welches sich auf einer mehrspurigen Straße befindet, wobei ein Fahrmanöver ausgehend von einem zweiten Fahrstreifen über einen ersten Fahrstreifen auf einen Verzögerungsstreifen der Straße geplant wird.

In den Figuren werden gleiche oder funktionsgleiche Elemente mit den gleichen Bezugszeichen versehen.

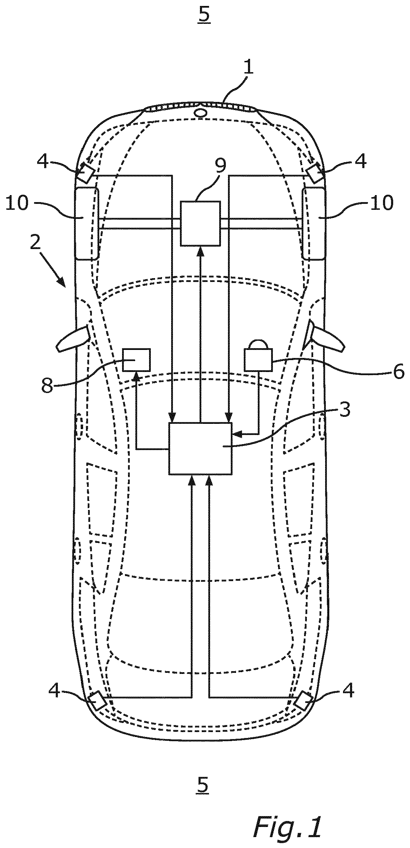

Fig. 1 zeigt ein Fahrzeug 1, welches vorliegend als Personenkraftwagen ausgebildet ist, in einer Draufsicht. Das Fahrzeug 1 umfasst ein Fahrerassistenzsystem 2, mittels welchem ein Nutzer bzw. Fahrer beim Manövrieren des Fahrzeugs 1 auf einer mehrspurigen Straße 11 unterstützt werden kann. Das Fahrzeug 1 bzw. das Fahrerassistenzsystem 2 umfasst eine Recheneinrichtung 3, welche beispielsweise durch zumindest ein elektronisches Steuergerät gebildet sein kann.

Darüber hinaus umfasst das Fahrerassistenzsystem 2 erste Umfeldsensoren 4, welche als Abstandssensoren und insbesondere als Radarsensoren ausgebildet sein können. In dem vorliegenden Beispiel umfasst das Fahrerassistenzsystem 2 vier erste Umfeldsensoren 4, von denen zwei in einem Frontbereich und zwei in einem Heckbereich des Fahrzeugs 1 angeordnet sind. Dabei sind die ersten Umfeldsensoren 4 in den jeweiligen Ecken des Fahrzeugs 1 angeordnet. Mit den ersten Umfeldsensoren 4 können entsprechende Messungen durchgeführt werden, um Objekte und insbesondere weitere Verkehrsteilnehmer 7 in einer Umgebung 5 des Fahrzeugs 1 erfassen zu können. Darüber hinaus umfasst das Fahrerassistenzsystem 2 einen zweiten Umfeldsensor 6, welcher als Kamera ausgebildet ist. Mit dem zweiten Umfeldsensor 6 bzw. der Kamera können als Sensordaten entsprechende Bilddaten bereitgestellt werden, welche die Umgebung 5 des Fahrzeugs 1 beschreiben.

Mittels der Recheneinrichtung 3 kann ein Antriebsmotor und/oder ein Bremssystem des Fahrzeugs 1 angesteuert werden, um eine Längsführung des Fahrzeugs 1 zu beeinflussen. Auf diese Weise können Spurwechselmanöver durch eine Reduzierung der Geschwindigkeit des Fahrzeugs 1 vorbereitet werden. Ferner ist vorgesehen, dass die Recheneinrichtung 3 dazu eingerichtet ist, ein vorliegend nur schematisch dargestelltes Lenksystem 9 des Fahrzeugs 1 anzusteuern. Durch die Ansteuerung des Lenksystems kann die Querführung des Fahrzeugs 1 bei einem automatisierten Spurwechselmanöver übernommen werden. Durch die Ansteuerung des Lenksystems 9 können die lenkbaren Räder 10 des Fahrzeugs 1 gelenkt werden und somit die Querführung bei dem Spurwechselmanöver übernommen werden. Darüber hinaus umfasst das Fahrerassistenzsystem 2 eine Ausgabeeinrichtung 8, mittels welcher ein Hinweis an den Nutzer bzw. Fahrer des Fahrzeugs 1 ausgegeben werden kann.

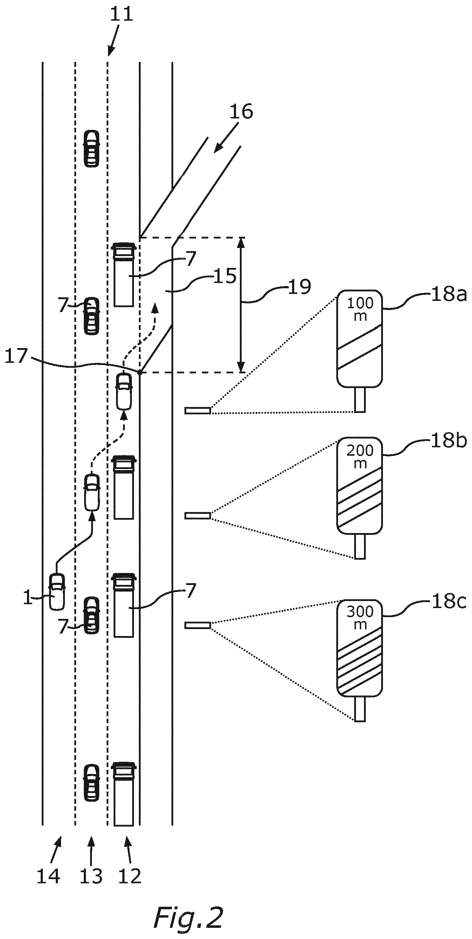

Fig. 2 zeigt in einer schematischen Darstellung eine Verkehrssituation, bei welcher sich das Fahrzeug 1 gemäß Fig. 1 auf einer mehrspurigen Straße 11 befindet. In dem vorliegenden Beispiel ist die Straße 11 als Autobahn ausgebildet. Dabei umfasst die Straße 11 einen ersten Fahrstreifen 12 bzw. eine rechte Spur, einen zweiten Fahrstreifen 13 bzw. eine mittlere Spur und einen dritten Fahrstreifen 14 bzw. eine linke Spur. In dem gezeigten Beispiel befindet sich das Fahrzeug 1 auf dem dritten Fahrstreifen14 bzw. der linken Spur der Autobahn. Dabei soll das Fahrzeug 1 ausgehend von dem dritten Fahrstreifen 14 zunächst auf den zweiten Fahrstreifen 13, danach auf den ersten Fahrstreifen 12 und im Anschluss daran über einen Verzögerungsstreifen 15 auf eine Ausfahrt 16 der Straße 11 manövriert werden. Somit kann das Fahrzeug 1 beispielsweise einer vorgegebenen Navigationsroute folgen.

Es ist zudem vorgesehen, dass automatisierte Spurwechselmanöver von dem dritten Fahrstreifen 14 auf den zweiten Fahrstreifen 13, von dem zweiten Fahrstreifen 13 auf den ersten Fahrstreifen 12 sowie von dem ersten Fahrstreifen 12 auf den Verzögerungsstreifen 15 des Fahrerassistenzsystems 2 vorbereitet und anschließend durchgeführt werden. Dabei können die jeweiligen Spurwechselmanöver in Abhängigkeit von der aktuellen Geschwindigkeit des Fahrzeugs, der Verkehrsdichte auf der Straße 11 und/oder einer vorbestimmten Strategie durchgeführt werden. Zudem ist es vorgesehen, dass die jeweiligen Spurwechselmanöver auf Grundlage eines Abstands des Fahrzeugs 1 zu einem Anfangspunkt 17 des Verzögerungsstreifens 15 durchgeführt werden. Insbesondere sollen die jeweiligen Spurwechselmanöver derart durchgeführt werden, dass dem Nutzer ein Spurwechsel von dem ersten Fahrstreifen 12 auf den Verzögerungsstreifen 15 ermöglicht wird, bevor oder sobald das Fahrzeug 1 den Anfangspunkt 17 des Verzögerungsstreifens 15 passiert hat.

Um den Abstand zwischen dem Fahrzeug 1 und dem Anfangspunkt 17 des Verzögerungsstreifens 15 bestimmen zu können, können digitale Kartendaten herangezogen werden. Diese digitalen Kartendaten können entsprechend entweder empfangen werden oder auf einem Speicher der Recheneinrichtung 3 bzw. des Fahrerassistenzsystems 2 hinterlegt sein. Die Position des Fahrzeugs 1 relativ zu der digitalen Karte kann mit einem hier nicht dargestellten Empfänger eines satellitengestützten Positionsbestimmungssystems ermittelt werden. Des Weiteren kann der Anfangspunkt 17 anhand der Sensordaten bzw. Bilddaten der Kamera 6 ermittelt werden. Vorliegend ist zudem vorgesehen, dass der Abstand zwischen dem Fahrzeug 1 und dem Anfangspunkt 17 anhand von Verkehrszeichen 18a, 18b, 18c ermittelt wird. Diese Verkehrszeichen 18a, 18b, 18c enthalten eine Entfernungsinformation, welche den Abstand zu der Ausfahrt 16 beschreibt. Vorliegend werden als Verkehrszeichen 18a, 18b, 18c mittels der Kamera 6 drei Entfernungsbaken erfasst. Dabei ist die Entfernungsbake 18c 300 Meter von der Ausfahrt 16 entfernt, die Entfernungsbake 18b ist 200 Meter von der Ausfahrt 16 entfernt und die Entfernungsbake 18a ist 100 Meter von der Ausfahrt 16 entfernt.

Anhand der Entfernungsinformation der Verkehrszeichen 18a, 18b, 18c bzw. der Entfernungsbaken kann unter Berücksichtigung einer Länge 19 des Verzögerungsstreifens 15 die Position des Anfangspunkts 17 ermittelt werden. Die Länge 19 des Verzögerungsstreifens 15 kann anhand der digitalen Kartendaten oder auf Grundlage einer vorbestimmten Pauschallänge ermittelt werden. Die kartenbasierten Daten und der schilderbasierte Wert können je nach Güte, beispielsweise der Genauigkeit des satellitengestützten Positionsbestimmungssystems, der Genauigkeit der Kamera und/oder der Region, gewichtet werden. Der Nutzer kann damit den Hinweis auf den Spurwechsel bekommen, bevor die Kamera 6 tatsächlich den Anfangspunkt erkennt. Alternativ oder zusätzlich kann das Fahrzeug 1 bzw. das Fahrerassistenzsystem 2 bei der Durchführung eines automatisierten Spurwechselmanövers eine rechte Fahrbahnmarkierung des ersten Fahrstreifens 12 höher gewichten. Somit kann dieser Fahrbahnmarkierung direkt auf den Verzögerungsstreifen 15 bzw. in die Ausfahrt 16 gefolgt werden, bevor diese als zusätzliche Fahrspur erkannt wird. Das Spurwechselmanöver kann gegebenenfalls bis zum tatsächlichen Erkennen des Anfangspunkts 17 durch die Kamera 6 zurückgehalten werden.

## Patentansprüche

1. Verfahren zum Manövrieren eines Fahrzeugs (1) auf einer mehrspurigen Straße (11) mit den Schritten:
- Empfangen eines Navigationsbefehls zum Durchführen eines Spurwechselmanövers von einem zweiten Fahrstreifen (13) der Straße (11) über einen ersten Fahrstreifen (12) einer Straße (11) auf einen Verzögerungsstreifen (15) der Straße (11),
- Bestimmen eines Abstands zwischen dem Fahrzeug (1) und einen Anfangspunkt (17) des Verzögerungsstreifens (15), wobei der Abstand anhand von Sensordaten eines Umfeldsensors (6) und/oder anhand von digitalen Kartendaten bestimmt wird, und
- Vorbereiten des Spurwechselmanövers von dem zweiten Fahrstreifen (14) auf den ersten Fahrstreifen (13) in Abhängigkeit von dem Abstand,
**gekennzeichnet durch**
- Erfassen eines Verkehrszeichens (18a, 18b, 18c), welches eine Entfernung zu einer Ausfahrt (16) der Straße (11) angibt, und Bestimmen einer durch das Verkehrszeichen (18a, 18b, 18c) angegebenen Entfernungsinformation, und
- Bestimmen des Abstands zwischen dem Fahrzeug (1) und dem Anfangspunkt (17) des Verzögerungsstreifens (15) zusätzlich in Abhängigkeit von der Entfernungsinformation.

2. Verfahren nach Anspruch 1,
**dadurch gekennzeichnet, dass**
eine Länge (19) des Verzögerungsstreifens (15) anhand von Kartendaten und/oder auf Grundlage von einer vorbestimmen Länge bestimmt wird und dass der Abstand zwischen dem Fahrzeug (1) und dem Anfangspunkt (17) in Abhängigkeit von der Länge (19) des Verzögerungsstreifens (15) bestimmt wird.

3. Verfahren nach Anspruch 1 oder 2,
**dadurch gekennzeichnet, dass**
die Sensordaten des Umfeldsensors (6), die digitalen Kartendaten und/oder die Entfernungsinformation für die Bestimmung des Abstands zwischen dem Fahrzeug (1) und dem Anfangspunkt (17) des Verzögerungsstreifens (15) gewichtet werden.

4. Verfahren nach einem der vorhergehenden Ansprüche,
**dadurch gekennzeichnet, dass**
zum Vorbereiten des Spurwechselmanövers ein Hinweis an den Nutzer des Fahrzeugs (1) ausgegeben wird, wobei der Hinweis ausgegeben wird, bevor der Anfangspunkt (17) des Verzögerungsstreifens (15) anhand der Sensordaten des Umfeldsensors (6) erkannt wird.

5. Verfahren nach einem der vorhergehenden Ansprüche,
**dadurch gekennzeichnet, dass**
das Spurwechselmanöver von dem zweiten Fahrstreifen (14) auf den ersten Fahrstreifen (13) erlaubt wird, nachdem der Anfangspunkt (17) des Verzögerungsstreifens (15) anhand der Sensordaten des Umfeldsensors (6) erkannt wird.

6. Verfahren nach einem der vorhergehenden Ansprüche,
**dadurch gekennzeichnet, dass**
eine Längsgeschwindigkeit des Fahrzeugs (1) zum Vorbereiten des Spurwechselmanövers angepasst wird.

7. Fahrerassistenzsystem (2) für ein Fahrzeugs (1), wobei das Fahrerassistenzsystem (2) dazu eingerichtet ist,
- einen Navigationsbefehl zum Durchführen des Spurwechselmanövers von einem zweiten Fahrstreifen (13) einer Straße (11) über einen ersten Fahrstreifen (12) der Straße (11) auf einen Verzögerungsstreifen (15) der Straße (11) zu empfangen,
- einen Abstand zwischen dem Fahrzeug (1) und einen Anfangspunkt (17) des Verzögerungsstreifens (15) anhand von Sensordaten eines Umfeldsensors (6) und/oder anhand von digitalen Kartendaten zu bestimmen, und
- das Spurwechselmanöver von dem zweiten Fahrstreifen (13) auf den ersten Fahrstreifen (12) in Abhängigkeit von dem Abstand vorzubereiten,
**dadurch gekennzeichnet, dass**
das Fahrerassistenzsystem (2) ferner dazu eingerichtet ist,
- ein Verkehrszeichen (18a, 18b, 18c), welches eine Entfernung zu einer Ausfahrt (16) der Straße (11) angibt, zu erfassen und eine durch das Verkehrszeichen (18a, 18b, 18c) angegebenen Entfernungsinformation zu bestimmen, und
- den Abstand zwischen dem Fahrzeug (1) und dem Anfangspunkt (17) des Verzögerungsstreifens (15) zusätzlich in Abhängigkeit von der Entfernungsinformation zu bestimmen.

## Claims

1. Method for maneuvering a vehicle (1) on a multi-lane road (11) comprising the steps of:
• receiving a navigation command to perform a lane change maneuver from a second lane (13) of the road (11) via a first lane (12) of a road (11) to a deceleration lane (15) of the road (11),
• determining a distance between the vehicle (1) and a starting point (17) of the deceleration lane (15), wherein the distance is determined based on sensor data of an environmental sensor (6) and/or based on digital map data, and
• preparing for the lane change maneuver from the second lane (14) to the first lane (13) depending on the distance,
**characterized by**
• detecting a traffic sign (18a, 18b, 18c) indicating a distance to an exit (16) of the road (11) and determining distance information indicated by the traffic sign (18a, 18b, 18c), and
• determining the distance between the vehicle (1) and the starting point (17) of the deceleration lane (15) additionally depending on the distance information.

2. The method according to claim 1,
**characterized in that**
a length (19) of the deceleration lane (15) is determined based on map data and/or based on a predetermined length, and that the distance between the vehicle (1) and the starting point (17) is determined depending on the length (19) of the deceleration lane (15).

3. The method according to claim 1 or 2,
**characterized in that**
the sensor data of the environmental sensor (6), the digital map data and/or the distance information are weighted for determining the distance between the vehicle (1) and the starting point (17) of the deceleration lane (15).

4. The method according to any one of the preceding claims,
**characterized in that**
for preparing the lane change maneuver, a notification is output to the user of the vehicle (1), wherein the notification is output before the starting point (17) of the deceleration lane (15) is recognized based on the sensor data of the environmental sensor (6).

5. The method according to any one of the preceding claims,
**characterized in that**
the lane change maneuver from the second lane (14) to the first lane (13) is allowed after the starting point (17) of the deceleration lane (15) is recognized based on the sensor data of the environmental sensor (6).

6. The method according to any one of the preceding claims,
**characterized in that**
a longitudinal velocity of the vehicle (1) is adjusted to prepare the lane change maneuver.

7. A driver assistance system (2) for a vehicle (1), wherein the driver assistance system (2) is configured to
• receive a navigation command to perform the lane change maneuver from a second lane (13) of a road (11) via a first lane (12) of the road (11) to a deceleration lane (15) of the road (11),
• determine a distance between the vehicle (1) and a starting point (17) of the deceleration lane (15) based on sensor data of an environmental sensor (6) and/or based on digital map data, and
• prepare the lane change maneuver from the second lane (13) to the first lane (12) depending on the distance,
**characterized in that**
the driver assistance system (2) is further configured to
• detect a traffic sign (18a, 18b, 18c) indicating a distance to an exit (16) of the road (11) and determine distance information indicated by the traffic sign (18a, 18b, 18c), and
• determine the distance between the vehicle (1) and the starting point (17) of the deceleration lane (15) additionally depending on the distance information.

## Revendications

1. Procédé pour manœuvrer un véhicule (1) sur une route à plusieurs voies (11) comprenant les étapes consistant à :
• recevoir une commande de navigation pour effectuer une manœuvre de changement de voie d'une deuxième voie (13) de la route (11) via une première voie (12) d'une route (11) vers une voie de décélération (15) de la route (11),
• déterminer une distance entre le véhicule (1) et un point de départ (17) de la voie de décélération (15), la distance étant déterminée sur la base de données de capteurs d'un capteur d'environnement (6) et/ou sur la base de données cartographiques numériques, et
• préparer la manœuvre de changement de voie de la deuxième voie (14) à la première voie (13) en fonction de la distance,
**caractérisé par**
• la détection d'un panneau de signalisation (18a, 18b, 18c) indiquant une distance jusqu'à une sortie (16) de la route (11) et la détermination d'une information de distance indiquée par le panneau de signalisation (18a, 18b, 18c), et
• la détermination de la distance entre le véhicule (1) et le point de départ (17) de la voie de décélération (15) en fonction additionnellement de l'information de distance.

2. Procédé selon la revendication 1,
**caractérisé en ce que**
une longueur (19) de la voie de décélération (15) est déterminée sur la base de données cartographiques et/ou sur la base d'une longueur prédéterminée et **en ce que** la distance entre le véhicule (1) et le point de départ (17) est déterminée en fonction de la longueur (19) de la voie de décélération (15).

3. Procédé selon la revendication 1 ou 2,
**caractérisé en ce que**
les données de capteurs du capteur d'environnement (6), les données cartographiques numériques et/ou l'information de distance sont pondérées pour déterminer la distance entre le véhicule (1) et le point de départ (17) de la voie de décélération (15).

4. Procédé selon l'une quelconque des revendications précédentes,
**caractérisé en ce que**
pour préparer la manœuvre de changement de voie, une notification est émise à l'utilisateur du véhicule (1), la notification étant émise avant que le point de départ (17) de la voie de décélération (15) ne soit reconnu sur la base des données de capteurs du capteur d'environnement (6).

5. Procédé selon l'une quelconque des revendications précédentes,
**caractérisé en ce que**
la manœuvre de changement de voie de la deuxième voie (14) à la première voie (13) est autorisée après que le point de départ (17) de la voie de décélération (15) est reconnu sur la base des données de capteurs du capteur d'environnement (6).

6. Procédé selon l'une quelconque des revendications précédentes,
**caractérisé en ce que**
une vitesse longitudinale du véhicule (1) est ajustée pour préparer la manœuvre de changement de voie.

7. Système d'assistance au conducteur (2) pour un véhicule (1), dans lequel le système d'assistance au conducteur (2) est configuré pour
• recevoir une commande de navigation pour effectuer la manœuvre de changement de voie d'une deuxième voie (13) d'une route (11) via une première voie (12) de la route (11) vers une voie de décélération (15) de la route (11),
• déterminer une distance entre le véhicule (1) et un point de départ (17) de la voie de décélération (15) sur la base de données de capteurs d'un capteur d'environnement (6) et/ou sur la base de données cartographiques numériques, et
• préparer la manœuvre de changement de voie de la deuxième voie (13) à la première voie (12) en fonction de la distance,
**caractérisé en ce que**
le système d'assistance au conducteur (2) est en outre configuré pour
• détecter un panneau de signalisation (18a, 18b, 18c) indiquant une distance jusqu'à une sortie (16) de la route (11) et déterminer une information de distance indiquée par le panneau de signalisation (18a, 18b, 18c), et
• déterminer la distance entre le véhicule (1) et le point de départ (17) de la voie de décélération (15) en fonction additionnellement de l'information de distance.
